Europäisches Patentamt

European Patent Office

Office européen des brevets

(19)

(11) Publication number: **0 334 955 B1**

# EUROPEAN PATENT SPECIFICATION

(45) Date of publication of patent specification: **23.12.92**   (51) Int. Cl.5: **B60B 21/10**, B60C 15/02

(21) Application number: **87902781.1**

(22) Date of filing: **12.05.87**

(86) International application number:
**PCT/JP87/00299**

(87) International publication number:
**WO 87/06889 (19.11.87 87/25)**

(54) **WHEEL RIM AND ASSEMBLY OF WHEEL RIM AND TIRE.**

(30) Priority: **15.05.86 JP 112181/86**

(43) Date of publication of application:
**04.10.89 Bulletin 89/40**

(45) Publication of the grant of the patent:
**23.12.92 Bulletin 92/52**

(84) Designated Contracting States:
**DE FR GB**

(56) References cited:
**FR-A- 2 325 522          FR-E- 49 486
JP-A- 6 116 102          JP-A-54 100 004
JP-A-58 145 508          JP-B- 5 415 007
US-D- 522 537**

(73) Proprietor: **SUMITOMO RUBBER INDUSTRIES
LIMITED
No. 1-1, Tsutsui-cho 1-chome
Chuo-ku Kobe-shi Hyogo 651(JP)**

(72) Inventor: **NOMA, Hiroyuki
16-3, Suzurandai Kita-machi 3-chome
Kita-ku, Kobe-shi Hyogo 651-11(JP)**

(74) Representative: **Stewart, Charles Geoffrey
SP TYRES UK LIMITED Tyre Technical Division
Fort Dunlop Birmingham B24 9OT(GB)**

EP 0 334 955 B1

## Description

The present invention relates to a rim usable for both a safety tyre and an ordinary tyre and an assembly of the rim and a safety tyre. More particularly, it provides an assembly of a wheel rim and a tyre which allows safe running free from the danger of the bead of the tyre coming off the rim even when the inner pressure of the tyre is lost and the vehicle is cornering sharply.

In an assembly of a tyre and a wheel rim, the tyre bead portion is conventionally held to the bead seat by virtue of the pressure of the inflation pressure of the tyre and the frictional force between the bead seat and the rubber of the bottom portion of the tyre bead. Thus, if inner pressure of the tyre is lowered, this holding force is reduced. If the vehicle steers sharply with such lowered inflation pressure caused by, for example a puncture, the tyre bead can come off the bead seat due to the transverse force generated by the steering forces. Usually wheel rims are provided with a well for mounting a tyre and this allows great danger of a serious accident when the bead portion of the tyre drops into the well and thereby allows the tyre to come completely off the rim. The mechanism of the bead portion of a tyre coming off the rim can be explained as follows.

The force in the transverse direction caused when a vehicle is cornering moves the tread portion in the transverse or axial direction relative to the wheel rim and produces deformation of the sidewalls of the tyre. This deformation produces forces which are transmitted from the sidewall and tyre carcass to the bead portions. As a result the ground contacting forces in the direction of the rotating axis of the tyre (hereinunder referred to as "axial direction") generate turning moment around the circumference of the bead.

At this time, if the inner pressure of the tyre i.e. inflation pressure is low, the turning moment lifts the heel of the bead portion and the frictional force between the bottom portion of the bead and the bead seat, which is the bead holding force is reduced. As a result, the bead moves on the tapered bead base axially inwardly which reduces the tension of the bead core. The bead holding force is therefore rapidly lost, so that the bead moves further and drops into the well. To solve this problem it has been proposed to use a rim having no well or to use a rim provided with a hump adjacent to the bead toe so as to prevent the bead portion from moving inwardly in the axial direction. It has also been proposed to use an assembly of a tyre and a wheel rim having a hump provided in the bead seat and an annular groove provided at the bottom of the bead portion of the tyre so as to engage with the hump (Japanese Patent Laid-Open No 13802.1974). Another proposal provides an assembly of a tyre and a rim having an annular groove provided axially inside the bead seat and a projection provided on the bead toe so as to engage the annular groove (Japanese Patent Publication No 15007/1982). A wheel rim comprising a circumferentially extending groove provided axially inside a circumferentially extending hump which is adjacent to the bead seat is disclosed by French Patent Publication FR-E-49 486 (addition to FR-A-823 403).

Among these only the assembly disclosed in the Japanese Patent Publication No 15007/1982 has an excellent effect as a bead holding mechanism.

Such an assembly, however, has a special configuration in the wheel rim at the point at which a normal tyre comes into contact with the bead seat of the wheel rim and the configuration at that point is the groove. It is therefore impossible to use safely a conventional tyre on the wheel rim and if a conventional tyre is used by mistake, there is a problem in terms of safety.

A wheel rim, for use with a tyre with a conventional bead construction or a bead having an axially and radially inwardly extended toe, having features according to the preamble of claim 1 is disclosed by German Patent Publication No DE-A-2724996.

It is an object of the present invention to provide an improved wheel rim and assembly of a wheel rim and a tyre.

According to the present invention a wheel rim is provided for use with a tyre with a conventional bead construction or a bead provided with an axially and radially inwardly extended toe, comprising a well and, in order axially outwardly of the well, a circumferentially extending protrusion defining an annular groove for receiving an extended tyre toe, a bead seat and a rim flange each of which define a heel point, the depth of the annular groove, the height of the protrusion and the heel point being related by $D \geq D_c > D_b$, where D is the diameter of the rim at the heel point, $D_c$ is the diameter of the protrusion and $D_b$ is the diameter of the bottom of the annular groove, characterised by a circumferentially extending hump axially outside the annular groove and adjacent the bead seat, the diameter $D_a$ at the top of said hump, the diameter $D_b$ at the bottom of said annular groove and the diameter D of said rim at the heel point having the following relationships:

$$-3.00mm < D - D_a < + 5.0mm$$

$$0mm \leqq D - D_c \leqq + 5.0mm$$

The invention further provides a tyre and wheel rim assembly comprising a wheel rim as described above and a tyre having a projecting toe portion which extends axially and radially inwardly of the bead reinforcement core and the bead includes between the toe portion and the bead seat engaging region an annular hump receiving groove shaped so that the tyre may fit correctly to the wheel rim.

Further aspects of the present invention will become apparent from the following description of some embodiments in conjunction with the attached diagrammatic drawings in which:-

Figure 1 is a part cross sectional view of a wheel rim according to the present invention;

Figure 2 is a part cross sectional view of an assembly of a wheel rim and a tyre according to the present invention;

Figure 3 shows another example of a wheel rim section;

Figure 4 is a part cross sectional view of an assembly of a wheel rim according to the present invention with a conventional tyre mounted thereon; and

Fig.5. is a cross sectional view of a tyre and wheel rim according to the present invention.

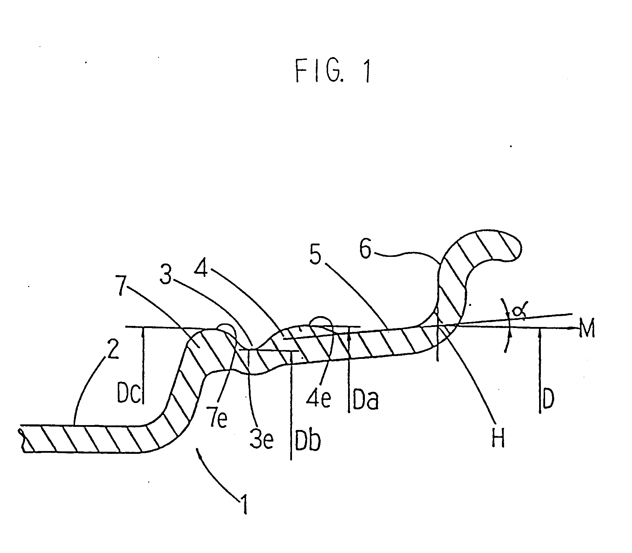

In Fig.1, a wheel rim 1 is provided with a well 2 for mounting a tyre. An annular groove 3 extending in the circumferential direction is provided axially outside the well and an inner protrusion 7. A hump 4, extending in the circumferential direction of a tyre, is formed axially outside the annular groove 3 and axially outside the hump 4, a bead seat 5 and a rim flange 6 are provided.

It is quite common to facilitate the assembly of a tyre on a wheel rim by tapering the bead seat 5 at a predetermined angle and with respect to the axial direction M. The angle $\alpha$ is preferably in the range of 2 to 10 degrees. If it is less than 2 degrees, it is difficult to mount a tyre on the wheel rim, while if it exceeds 10 degrees the bead holding force is lowered when the tyre is used.

The diameter Da, Db, Dc of the wheel rim surface at the top 4e of the hump, the bottom 3e of the annular groove, and the top 7e of the inner protrusion, respectively, and the diameter D of the bead seat preferably have the following relationships:

$$-3.0mm \leqq D - Da \leqq + 5.0mm$$
$$+2.0 mm \leqq D - Db \leqq + 20 mm$$
$$0 mm \leqq D - Dc \leqq + 5.0mm$$

If D - Da > + 5.0mm, D - Db < +2.0mm or D-Dc > 5.0mm, it is difficult to obtain an effective bead holding mechanism and if D - Da <-3.0mm or D - Dc < 0mm, the operation of mounting a tyre on the wheel rim is too difficult. If D - Db < +20mm, it is difficult to produce a wheel rim having a adequate durability.

The diameter D of the bead seat here means the diameter of the wheel rim at the seat end H is the intersecting point of the extensions of the bead seat 5 and the inner surface of the flange 6.

It is further possible to facilitate the mounting of a tyre on the wheel rim by setting the diameter Da, Db and Dc of the rim at the respective points so as to have the relationship of Da > Dc > Db.

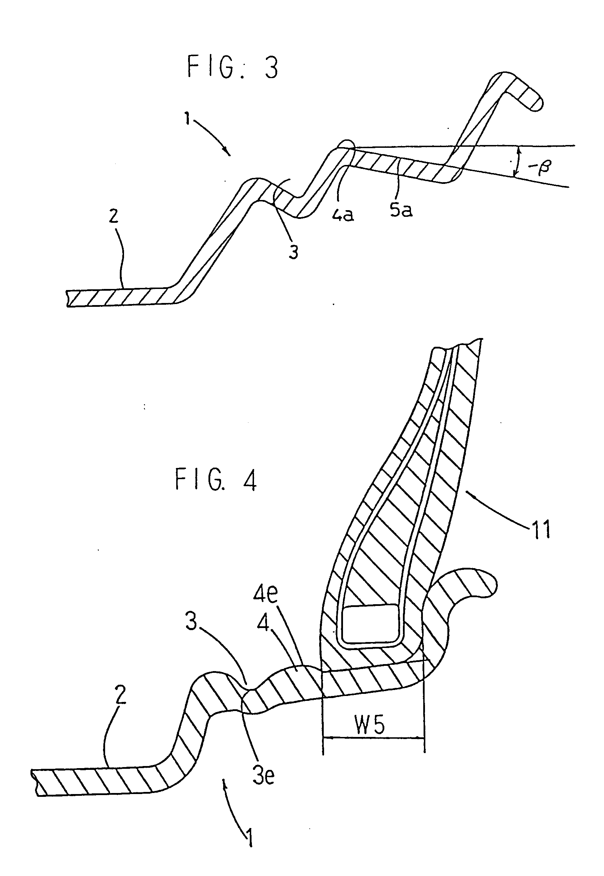

Fig.3 shows an alternative example of the present invention. A bead seat 5a has a reverse taper at an angle $\beta$ with respect to the axial direction, and a circumferential continuous hump 4a is provided at the inner end of the bead seat 5a without any particular protrusion. The angle $\beta$ is preferably in the range of -10 degrees to 2 degrees. If it is more than -2 degrees, it is difficult to obtain the necessary holding force, while if it is under - 10 degrees,. the force applied to the flange portion becomes so large as to necessitate a special configuration for reinforcing the flange portion.

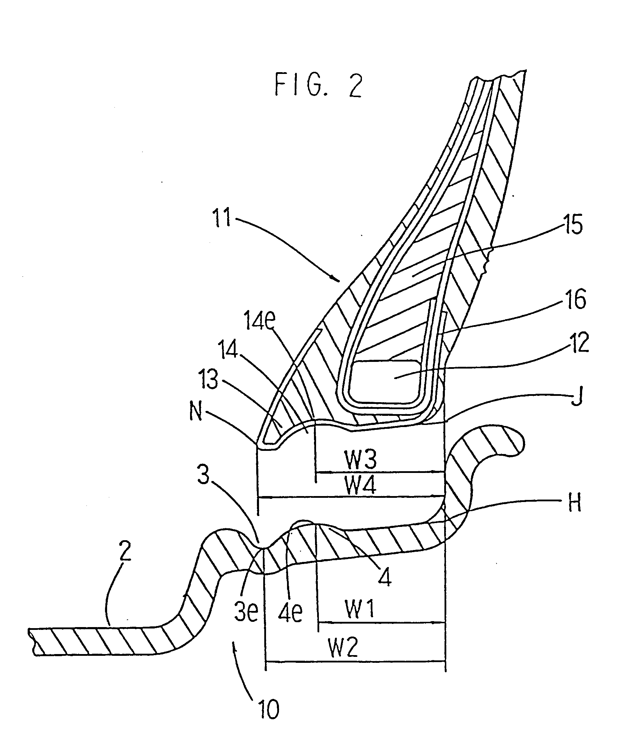

In Fig.2, the bead of the tyre is shown provided with a non stretching core 12, a projecting toe portion 13 formed axially inside of the bead core 12 extending inwardly in the radial direction, and a hump receiving groove 14 formed axially outside the toe portion 13. On assembly to the wheel rim the toe portion13 and the groove 14 engage with the annular groove 3 and the hump 4, respectively, of the wheel rim, whereby it prevents the bead portion from being moved inwardly in the axial direction by a force in the transverse direction caused during cornering of the vehicle when the inner pressure of the tyre is low.

It is necessary to set the configuration and the dimensions of the toe 13 and the configuration and the dimensions of the hump groove 14 in correspondence with the configuration and the dimensions of the annual groove 3 and the hump 4, respectively. It goes without saying that a bead apex 15 and a bead reinforcing chafer 16 are applicable to the bead portion in accordance with the purpose as in a conventional tyre. The rubber of the toe portion is preferably a comparatively hard rubber having a hardness of, for example, 70 degrees to 95 degrees JIS-A. It is further possible to form the chafer 16 in such a manner as to envelope the toe portion 13.

It is possible to enhance the bead portion holding force of the assembly according to the present invention by ensuring the following relationships between the axial distance W3 from the heel end J of the tyre 11 to the bottom 14e of the hump groove 14 and the axial distance W4 from the heel end J to the end N of the toe portion 13, and between the axial distance W1 from the base end H of the bead seat to the top 4e and the axial distance W2 from the bead seat end H to the bottom 3e of the annular groove 3, respectively.

$0.5 \leq W3/W1 \leq 1.2$
$0.7 \leq W4/W2 \leq 1.2$

Fig.4 shows the wheel rim according to the present invention with a conventional tyre fitted. The width W5 of the bead seat is chosen to match the dimension of a rim which is at present standardised for conventional tyres and so the wheel rim according to the present invention is advantageous in that although it adopts the above described special structure for its own special tyre it is, applicable also to a tyre having a conventional bead shape and structure.

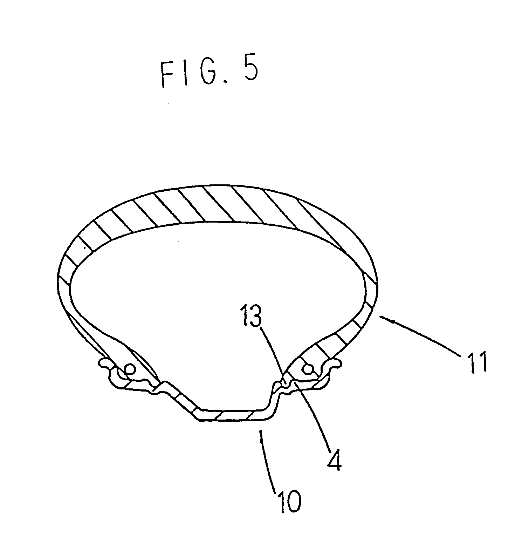

Fig.5 shows a sectional view of an assembly according to the present invention, in which the above-described special structure is adopted to the bead portions on both sides of the tyre. Needless to say, it is possible to adopt the special structure only to one bead.

The present invention is applicable to tyres and wheels for various vehicles such as passenger cars, motor-bikes, tricycles, ATVs, trucks and buses.

By way of example the following examples are suitable for applications of the present invention to the tyres and wheel rims for passenger cars, motor-bikes, and ATVs are shown dimensionally in Table 1.

## Table 1

| | | | Example 1 Passenger Car (1) | Example 2 Passenger Car (2) | Example 3 Motorbike | Example 4 ATV |
|---|---|---|---|---|---|---|
| Wheel Rim | | Size | 6.5 × 15 | 6 ×15 | 4.00 × 17 | 9 × 9.0 |
| | | D | 380.2 mm | 380.2 mm | 433.8 mm | 227.8 mm |
| | | Da | 379.2 mm | 379.2 mm | 433.12 mm | 229.4 mm |
| | | Db | 368.2 mm | 370.2 mm | 423.8 mm | 215.8 mm |
| | | Dc | 376.2 mm | 377.2 mm | 429.8 mm | 223.8 mm |
| | | $\alpha$ | 5° | 5° | 5° | 5° |
| | | W1 | 22.0 mm | 22.0 mm | 16.0 mm | 15.0 mm |
| | | W2 | 32.0 mm | 31.5 mm | 22.0 mm | 25.0 mm |
| Tire | | Size | 205/65R15 | 215 SR15 | 150/70-17 | 25 × 12.00-9 |
| | | W3 | 17 mm | 18.5 mm | 15.5 mm | 15 mm |
| | | W4 | 27.5 mm | 28.5 mm | 21.5 mm | 27 mm |

The various tyres and wheel rims were produced according to the specifications shown in Table 1, and indoor tests and running tests were carried out, thereby confirming the effect of the present invention.

Table 2 shows examples of the present invention and a comparative example of conventional tyres and wheel rims for a passenger car. Example 1-1 is an assembly of a wheel rim and a tyre of the present invention, example 1-2 an assembly of a wheel rim of the present invention and a conventional tyre, and Comparative example 1 an assembly of conventional wheel rim and tyre, the tyre being 205.65R15 and the rim 6.5 in 15 in in size.

The bead dislodgement forces of these three assemblies were measured by an indoor testing machine where bead dislodgement was caused by applying a force in the transverse direction to the tread portion under three inflation conditions where the inner pressure was 0 kg.cm , 1.0 kg/cm and 2.0 kg.cm , respectively.

## Table 2

### [Tires and Wheel Rims for a Passenger Car (1)]

| | | Example 1-1 | Example 1-2 | Comparative Example 1 |
|---|---|---|---|---|
| Wheel Rim | Size | 6.5 × 15 | 6.5 ×15 | 61/2 JJ × 15 |
| | D | 380.2 mm | 380.2 mm | Conventional Rim |
| | Da | 379.2 mm | 379.2 mm | |
| | Db | 368.2 mm | 368.2 mm | |
| | Dc | 376.2 mm | 376.2 mm | |
| | $\alpha$ | 5° | 5° | |
| | W1 | 22.0 mm | 22.0 mm | |
| | W2 | 32.0 mm | 32.0 mm | |
| Tire | Size | 205/65R15 | 205/65R15 | 205/65R15 |
| | W3 | 17 mm | Conventional Tire | Conventional Tire |
| | W4 | 27.5 mm | | |
| Indoor Test | *B.D.F \\ ** I.P. | | | |
| | 0 | 680 | 380 | 200 |
| | 1.0 | 1240 | 900 | 810 |
| | 2.0 | 2235 | 1770 | 1500 |

* B.D.F. ... Bead Dislodgement Force (kg)

** I.P. ... Inner Pressure (kg/cm$^2$)

As can be seen, example 1-1 of the present invention exhibited an excellent bead dislodgement capacity. In the case of mounting a conventional tyre on the wheel rim according to the present invention a slight effect was also exhibited on the bead dislodgement capacity, as it clear from the results of the example 1-2 and the assembly was found to be practically usable without a problem.

Table 3 shows further examples of the present invention and a comparative example of other tyres and wheel rims for a passenger car. Examples 2-1 and 2-2 are assemblies of wheel rims and tyres according to the present invention, example 2-3 an assembly of a wheel rim of the present invention and a conventional tyre, and comparative example 2 and assembly of a conventional wheel rim and a conventional tyre, the tyre being 215 SR15 and the rim 6 in x 15 in. in size. The tyres and wheel rims in the examples were produced specifically for a car with four wheel drive.

Table 3

[Tires and Wheel Rims for a Passenger Car (2)]

| | | Example 2-1 | Example 2-2 | Example 2-3 | Comparative Example 2 |
|---|---|---|---|---|---|
| Wheel Rim | Size | 6 × 15 | 6 ×15 | 6 × 15 | 6 JJ × 15<br><br>Conventional Rim |
| | D | 380.2 mm | 380.2 mm | 380.2 mm | |
| | Da | 379.2 mm | 379.2 mm | 379.2 mm | |
| | Db | 370.2 mm | 370.2 mm | 370.2 mm | |
| | Dc | 377.2 mm | 377.2 mm | 377.2 mm | |
| | α | 5° | 5° | 5° | |
| | W1 | 22.0 mm | 22.0 mm | 22.0 mm | |
| | W2 | 31.5 | 31.5 mm | 31.5 mm | |
| Tire | Size | 215/SR15 | 215/SR15 | 215/SR15 | 215/SR15 |
| | W3 | 18.5 mm | 18.5 mm | Conventional Tire | Conventional Tire |
| | W4 | 28.5 mm | 28.5 mm | | |
| | Hardness of Toe Portion | 78° | 64° | | |
| Indoor Test | *B.D.F. ** I.P | | | | |
| | 0 | 690 | 650 | 340 | 200 |
| | 1.0 | 1730 | 1320 | 930 | 840 |
| | 2.0 | 1800 | 1800 | 1500 | 1270 |

*B.D.F. ... Bead Dislodgement Force (kg)

** I.P ... Inner Pressure (kg/cm$^2$)

These examples show that the present invention has greatly advantageous effects on the bead dislodgement capacity as in the examples in table 2. In the case of mounting a conventional tyre on the wheel rim according to the present invention a slight effect was also exhibited on the bead dislodgement capacity, and the assembly was found to be practically usable without a problem. It was also found from examples 2-1 and 2-2 that a tyre having a harder toe portion exhibits a higher effect, specifically, when the inner pressure is low. The effect of the present invention were further confirmed by running tests. The results are shown in table 4.

Table 4

| Tires and Wheel Rims for a Passenger Car (1) | | | Tires and Wheel Rims for a Passenger Car (2) | | | |
|---|---|---|---|---|---|---|
| | Ex. 1-1 | Comp. Ex. 1 | | | Ex. 2-1 | Comp. Ex. 2 |
| *I.P (kg/cm$^2$) | 0.0 | 0.8 | Turning Speed | | ** TN/D | ** TN/D |
| | | | | 30 km/h | 2/NO | 2/NO |
| | | | | 35 km/h | 2/NO | 2/NO |
| | | | | 40 km/h | 10/NO | 3/YES |

*. I.P. ... Inner Pressure When Bead Dislodgement
        Occurred

**TN    ... Number of TESTS

    D    ... Bead Dislodgement Occurred?

In the left column of table 4 the results of the tests of the tyres and wheel rims for a passenger car of example 1-1 and comparative example 1 in table 2 are shown. The respective assemblies of the tyres and wheel rims were mounted on the right front wheel of a Japanese passenger car having a displacement of 3 litres. The inner pressure was gradually reduced in a J turn test in which the wheel was sharply turned to the left to give a circle of 25m radius at a speed of 60 km/h, thereby causing bead dislodgement. In these tests, bead dislodgement resulted in the assembly of comparative example 1 when the inner pressure was 0.8kg.cm , while it was not until the inner pressure was 0 kg/cm , in other words, until the tyre was completely punctured that bead dislodgement occurred in the assembly of example 1-1.

In the right column of table 4 the results of the tests of other tyres and wheel rims for a passenger car of example 2-1 and comparative example 2 in table 3 are shown. After the respective tyres and wheel rims were completely assembled in inflated the inner pressure was reduced to 0 kg/cm . The respective assemblies were mounted on the right front wheel of a Japanese car with four wheel drive having a displacement of 4 litres. Whether or not bead dislodgement occurred was examined in a J turn test in which the wheel was sharply turned left to give a 30m radius at speeds of 30 km/h, 35 km/h and 40 km/h, respectively. In these tests, bead dislodgement was caused in the assembly of comparative example 2 when the wheel had been tested by the J turn test 3 rimes at a speed of 40 km/h, while no bead dislodgement was caused in the assembly of example 2-1 even after the wheel had been tested 10 times at a speed of 40 km/h.

It goes without saying that application of the present invention does not impair other performances of a tyre. As an example, the results of the comparison between the performance of a tyre in examples 1-01 and comparative example 1 are shown in table 5.

EP 0 334 955 B1

Table 5

|  | Example 1-1 | Comparative Example 1 |
|---|---|---|
| Rolling Resistance Index | (100) | (100) |
| Cornering Power kg/deg (Index) | 151 (101) | 149 (100) |
| Cornering Force @ 10° kg (Index) | 433 (100) | 433 (100) |
| Self Aligning Torque Power kg·m/deg (Index) | 4.5 (102) | 4.4 (100) |
| Repulsive Power Index at the Time of GOING over a Bump (Index) | (99) | (100) |
| Vertical Stiffness (Index) | 21.2 (101) | 21.0 (100) |
| Lateral Stiffness (Index) | 15.9 (99) | 16.0 (100) |
| Rolling Radius mm (Index) | 311 (100) | 311 (100) |

Table 5 shows the values obtained by measuring the respective assemblies of tyres and wheel rims in the indoor tests carried out under the conditions that the inflation pressure was 2.0 kg/cm and the vertical load was 400 kg.

The rolling resistance index is indicated by the index of the value of the rolling resistance at a speed of 80 km/h, the cornering power by the value of the cornering force at a slip angle of 1 degree, the cornering force at 10 degrees by the value of the cornering force at a slip angle of 10 degrees, and the self aligning torque power of the value of the self aligning torque at a slip angle of 1 degree respectively. The repulsive power index at the time of going over a bump is indicated by the index of the average value of the repulsive power inn the vertical direction and in the forward and backward direction produced when going over a square far of 10 mm x 10 mm which is attached to a drum at a speed of 20 to 100 km/h. The index in each performance is the value taken on the assumption that the value in comparative example 1 is 100.

No degradation caused by the application of the present invention was found in any performance of a tyre.

An assembly of a wheel rim and a tyre according to the present invention can be produced by a conventional method, and be mounted on a vehicle in the same way as in a conventional tyre and wheel rim. , Furthermore, an assembly of the present invention enables safe running free from danger of dislodgement of the bead portion even when the inner pressure of the tyre is lowered and when the vehicle is cornering sharply.

**Claims**

1. A wheel rim for use with a tyre with a conventional bead construction or a bead provided with an axially and radially inwardly extended toe, comprising a well (2) and, in order axially outwardly of the well, a circumferentially extending protrusion (7) defining an annular groove (3) for receiving an extended tyre toe, a bead seat (5) and a rim flange (6) each of which define a heel point (H), the depth of the annular groove (3), the height of the protrusion (7) and the heel point (H) being related by $D \geq D_c > D_b$, where D is the diameter of the rim at the heel point (H), $D_c$ is the diameter of the protrusion (7) and $D_b$ is the diameter of the bottom (3e) of the annular groove (3), characterised by a circumferentially extending hump (4) axially outside the annular groove (3) and adjacent the bead seat (5), the diameter $D_a$ at the top (4e) of said hump (4), the diameter $D_b$ at the bottom (3e) of said annular groove (3), and the diameter D of said rim at the heel point (H) having the following relationships:

   $$-3.0mm < D - D_a < + 5.0mm$$
   $$0mm \leq D - D_c \leq + 5.0mm$$

2. A wheel rim according to claim 1, characterised in that the bead seat (5) is tapered at a predetermined angle ($\alpha$) with respect to the axial direction (M).

3. A wheel rim according to either of claims 1 and 2, characterised in that the diameter $D_b$ at the bottom (3e) of said annular groove (3) and the diameter D of said rim at the heel point (H) have the following relationship:

8

+2.0mm < D - D_b < + 20mm.

4. A wheel rim according to any one of claims 1 to 3 characterised in that the diameter D of said rim at the heel point (H) is in the range of 227.8 to 433.8mm.

5. A wheel rim according to any one of claims 1 to 4 characterised is that the diameters $D_a$, $D_b$, $D_c$ at said respective points have the following relationship:

$D_a > D_c > D_b$

6. A tyre and wheel rim assembly comprising a tubeless tyre (11) having a pair of bead portions and a wheel rim (1) according to any one of claims 1 to 5 for mounting the tyre, characterised in that at least one of said bead portions is provided with a toe (13) formed axially inside a non-stretching bead core (12) in such a manner as to extend inwardly in the radial direction and an annular hump receiving groove (14) formed between said toe portion (13) and a heel portion, and in that said annular groove (3) receives the end (n) of said toe portion (13) and said hump (4) is engaged with said hump receiving groove (14).

7. A tyre and wheel rim assembly according to claim 6, characterised in that the axial distance (w3) between the heel end (J) of said tyre (11) and the bottom (14e) of the hump receiving groove (14) is in the range of 50 to 120% of the axial distance (w1) between the bead seat end (h) of said wheel rim (10) and said apex (4e) of said hump (4), and the axial distance (w4) between said heel end (J) of said tyre (11) and said end (N) of said toe portion (13) is in the range of 70 to 120% of the axial distance (w2) between said bead seat end (H) of said wheel rim (10) and said bottom (3e) of said annular groove (3).

**Patentansprüche**

1. Radfelge zur Verwendung mit einem Reifen mit einem üblichen Wulstaufbau oder mit einem Wulst, der mit einer axial und radial nach innen verlängerten Zehe versehen ist, wobei die Felge umfaßt ein Tiefbett (2) und in der Reihenfolge axial von dem Tiefbett nach außen einen sich in Umfangsrichtung erstreckenden vorstehenden Abschnitt (7), der eine Ringnut (3) zum Aufnehmen einer verlängerten Reifenzehe enthält, einen Wulstsitz (5) und ein Felgenhorn (6), die jeweils zusammen einen Fersenpunkt (H) bestimmen, wobei die Tiefe der Ringnut (3) die Höhe des vorstehenden Abschnitts (7) und die Fersenstelle (H) in Beziehung gesetzt sind durch $D \leqq D_c > D_b$, wobei D der Durchmesser der Felge an dem Fersenpunkt (H), $D_c$ der Durchmesser des vorstehenden Abschnitts (7) und $D_b$ der Durchmesser an dem Boden (3e) der Ringnut (3) ist, gekennzeichnet durch einen sich in Umfangsrichtung erstreckenden Höcker (4) axial außerhalb der Ringnut (3) und dem Wulstsitz (5) benachbart, wobei der Durchmesser $D_a$ an der Oberseite (4e) des Höckers (4), der Durchmesser $D_b$ an dem Boden (3e) der Ringnut (3) und der Durchmesser D der Felge an dem Fersenpunkt (H) die folgenden Beziehungen besitzen:

- 3,0 mm < D - D_a < + 5,0 mm
0 mm ≦ D - D_c ≦ + 5,0 mm.

2. Radfelge nach Anspruch 1, dadurch gekennzeichnet, daß der Wulstsitz (4) mit einem vorbestimmten Winkel ($\alpha$) bezüglich der Axialrichtung (M) schräggestellt ist.

3. Radfelge nach einem der Ansprüche 1 oder 2, dadurch gekennzeichnet, daß der Durchmesser $D_b$ an dem Boden (3e) der Ringnut (3) und der Durchmesser D der Felge an dem Fersenpunkt (H) die folgende Beziehung besitzen:

+ 2,0 mm < D - D_b < + 20 mm.

4. Radfelge nach einem der Ansprüche 1 bis 3, dadurch gekennzeichnet, daß der Durchmesser D der Felge an dem Fersenpunkt (H) im Bereich von 227,8 bis 433,8 mm liegt.

5. Radfelge nach einem der Ansprüche 1 bis 4, dadurch gekennzeichnet, daß die Durchmesser $D_a$, $D_b$, $D_c$

EP 0 334 955 B1

an den jeweiligen Stellen die folgende Beziehung besitzen:

$D_a > D_c > D_b$.

6.  Reifen/Radfelgen-Anordnung, welche umfaßt einen schlauchlosen Reifen (11) mit einem Paar Wulstabschnitten und eine Radfelge (1) nach einem der Ansprüche 1 bis 5 zum Aufziehen des Reifens, dadurch gekennzeichnet, daß mindestens einer der beiden Wulstabschnitte mit einer axial innerhalb eines nicht streckbaren Wulstkerns (12) in solcher Weise ausgebildeten Zehe (13) versehen ist, daß sie sich in radialer Richtung nach innen erstreckt, und eine ringförmige, Höcker aufnehmende Nut (14) zwischen dem Zehenabschnitt (13) und dem Fersenabschnitt gebildet ist und daß die Ringnut das Ende (n) des Zehenabschnitts (13) aufnimmt und der Höcker (4) in Eingriff mit der Höcker aufnehmenden Nut (14) ist.

7.  Reifen/Radfelgen-Anordnung nach Anspruch 6, dadurch gekennzeichnet, daß der Axialabstand (w3) zwischen dem Fersenende (J) des Reifens (11) und dem Boden (14e) der Hökker aufnehmenden Nut (14) im Bereich von 50 bis 120% des Axialabstandes (w1) zwischen dem Wulstsitzende (h) der Radfelge (10) und dem Gipfel (4e) des Höckers (4) liegt und daß der Axialabstand (w4) zwischen dem Fersenende (J) des Reifens (11) und dem Ende (N) des Zehenabschnitts (13) im Bereich von 70 bis 120% des Axialabstands (w2) zwischen dem Wulstsitzende (H) der Radfelge (10) und dem Boden (3e) der Ringnut (3) liegt.

**Revendications**

1.  Jante de roue destinée à être utilisée avec un pneumatique possédant une construction de talon classique, ou un talon muni d'une pointe de talon dirigée axialement et radialement vers l'intérieur, qui comprend une base creuse (2) et, dans l'ordre, en allant axialement vers l'extérieur à partir de la base creuse, une saillie circonférentielle (7), qui délimite une gorge annulaire (3) destinée à recevoir une pointe de talon de pneumatique prolongée, un repos de talon (5) et un rebord de jante (6), dont chacun définit un point de bout de talon (H), la profondeur de la gorge annulaire (3), la hauteur de la saillie (7) et le point de bout de talon (H) étant liés par $D \geq D_c \geq D_b$, où D est le diamètre de la jante au point de bout de talon (H), $D_c$ est le diamètre de la saillie (7) et $D_b$ est le diamètre du fond (3e) de la gorge annulaire (3), caractérisée par une bosse circonférentielle (4), située axialement à l'extérieur de la gorge annulaire (3) et adjacente au repos de talon, le diamètre $D_a$ du sommet de ladite bosse, le diamètre $D_b$ du fond de ladite gorge annulaire et le diamètre D de ladite jante au point de bout de talon étant liés par les relations suivantes :

- 3,0 mm < $D - D_a$ < + 5,0 mm
0 mm ≤ $D - D_c$ ≤ + 5,0 mm.

2.  Jante de roue selon la revendication 1, caractérisée en ce que le repos de talon (5) est en pente d'un angle prédéterminé (.) par rapport à la direction axiale (M).

3.  Jante de roue selon une quelconque des revendications 1 et 2, caractérisée en ce que le diamètre $D_b$ au fond (3e) de ladite gorge annulaire (3) et le diamètre D de ladite jante au point de bout de talon (H) sont liés par la relation suivante :

+ 2,O mm < D - Db < + 20 mm.

4.  Jante de roue selon une quelconque des revendications 1 à 3, caractérisée en ce que le diamètre D de ladite jante au point de bout de talon (H) est compris dans l'intervalle allant de 227,8 à 433,8 mm.

5.  Jante de roue selon une quelconque des revendications 1 à 4, caractérisée en ce que les diamètres $D_a$, $D_b$ et $D_c$ auxdits points respectifs sont liés par la relation suivante :

$D_a > D_c > D_b$.

6.  Ensemble pneumatique et jante de roue comprenant un pneumatique sans chambre (11) possédant une paire de talons et une jante de roue (1) selon une quelconque des revendications 1 à 5, destinée

10

au montage du pneumatique, caractérisé en ce qu'au moins un desdits talons est muni d'une pointe de talon (13) formée axialement à l'intérieur d'une tringle de talon inextensible (12) de manière à s'étendre vers l'intérieur dans la direction radiale, et une gorge annulaire (14) de réception de la bosse formée entre ladite pointe de talon (13) et un bout de talon, et en ce que ladite gorge annulaire (3) reçoit l'extrémité (n) de ladite pointe de talon (13) et ladite bosse (4) est en prise avec ladite gorge (14) de réception de la bosse.

7. Ensemble pneumatique et jante de roue selon la revendication 6, caractérisé en ce que la distance axiale (w3) mesurée entre l'extrémité (J) de bout de talon dudit pneumatique (11) et le fond (14e) de la gorge (14) de réception de la bosse est comprise entre 50 et 120 % de la distance axiale (w1) entre l'extrémité (h) du repos de talon de ladite jante de roue (10) et ledit sommet (4e) de ladite bosse (4), et la distance axiale (w4) mesurée entre ladite extrémité de bout de talon (J) dudit pneumatique (11) et ladite extrémité (N) de ladite pointe de talon (13) est comprise entre 70 et 120 % de la distance axiale (w2) mesurée entre ladite extrémité (H) de repos de talon (10) et ledit fond (3e) de ladite gorge annulaire (3).

FIG. 1

# FIG. 2

FIG. 3

FIG. 4

FIG. 5